# EUROPEAN PATENT SPECIFICATION

(11) **EP 3 745 841 B1**
(45) Date of publication and mention of the grant of the patent: **22.12.2021**
(21) Application number: 18705255.0
(22) Date of filing: 30.01.2018
(51) Int. Cl.: A01F 12/44

(54) **AGRICULTURAL HARVESTING COMBINE PROVIDED WITH BONUS SIEVES**
LANDWIRTSCHAFTLICHE ERNTEMASCHINE MIT ZUSATZ SIEB
MOISSONEUSE AGRICOLE AVEC TAMIS ADDITIONEL

(43) Date of publication of application: 09.12.2020
(73) Proprietor: KUBOTA CORPORATION, Osaka-shi, Osaka 556-8601 (JP)
(72) Inventor: MATOUSEK, Robert A., Center, KS 67147 (US)
(74) Representative: Cossu, Alessandro
(86) International application number: PCT/US2018/015879
(87) International publication number: WO 2019/151981

(56) References cited:
- EP-A2- 2 055 178
- US-A- 2 923 409
- US-A1- 2017 339 832

## Description

### BACKGROUND OF THE INVENTION

The present disclosure relates to harvesting combines and more particularly to a combine design that permits additional sieve capacity concomitant with tailings return thereto.

Typical to the architecture of traditional combines are cleaning sieves that are located to the rear of and beneath the threshing mechanisms of the combine harvester. This routinely results in the sieves being located between two sets of tires.

As such, the width of the sieves is regulated by the distance between the tires of these respective sets and especially between the smaller rear steering tires. In the case of the large front tires, they have a fixed orientation relative to the length of the machine, and generally are held fast on the front axle at a fixed separation distance, parallel to the chassis containing the threshing and cleaning mechanisms. However, in the case of the rear steering tires, they effect the steering by rotating around their (more or less) vertical king pin, and in so doing move considerably inwardly toward the side of the machine either in their front or their rear depending on the direction of steering. This inward movement of the steered tires necessitates a corresponding reduction in the width of the separator, as compared to the larger width that is possible between the front wheels held fast, in order to allow tire clearance.

As the rear axle oscillates around its central pivot pin allowing the tires to move up and down literally feet in distance, the tires move inwardly even more. As a consequence, the width of sieves in a typical combine is often reduced to a width that is much less than adequate for the given capacity of a high horsepower modern combine resulting in lower than desired cleaning system capacity of the machine.

Therefore, it is nearly mandated that, if a manufacturer wishes to add extra sieve area in a high horsepower combine, he cannot do it by increasing the sieve width, which is quite effective, but instead must choose to keep the sieves the same width (i.e. constant over the area where cleaning sieves are located) and just make them longer, which is much less effective.

Similar limitations on the width of the sieves also exist in tracked harvesting combines (crawlers), where the tracks are typically looped around rear wheels mounted on a rear axle and front wheels mounted on a front axle.

In both types of combines, i.e. mounted on wheels or tracked, the driving axle is typically the front axle; it is however also possible and known in the art to use the rear axle as the driving axle.

Combine designers realized at the outset that they needed to recover unthreshed material as it exited from the rear of the sieves and return it to the threshing mechanism for rethreshing to separate additional grain from the MOG.

This was an acceptable practice when harvesting combine machines were small and rotary threshing capacity was not challenged.

As combine horsepower and capacities have increased over time, the industry has learned not to return the tailings to the front of the rotor for reprocessing, and has instead learned to reprocess the tailings near the rear of the separator and return them to the upper sieve for recovery of the grain.

The problem of this approach is the following: if the rotor is running very close to its maximum capacity to thresh and separate the volume of material the feeder is providing, then the rotor cannot effectively address separating at the increased rate that recycling tailings would require. That is, the best that the rotor can do is to recover grain without tailings return.

With an increased burden caused by tailings recycle, the rotor is necessarily beyond its maximum capacity and the percentage of grain recovered diminishes. That means that the amount of tailings to recycle will increase. This is a spiraling diminution in grain recovery. Thus, a different approach to the issue of tailings recycle is required.

US 2017/339832 A1 discloses a harvesting combine featuring additional sieves arranged side by side to main sieves.

As illustrated below in detail, by providing a second grain cleaning station (so-called "bonus sieves" herein) in accordance with the invention, it becomes possible to address and solve the tailings recycle issue.

### BRIEF SUMMARY OF THE INVENTION

Disclosed is a harvesting combine comprising a forward power processing unit (PPU) and a set of wheels or tracks, supported and kept at a distance (separation distance) by a driving axle, and further comprising a grain storage and additional sieves ("bonus sieves"). As already noted above, the driving axle is typically the front axle; however, teaching of the present invention can also be applied to combines using the rear axle as the driving axle. Two designs of the inventive combine are disclosed: for high horsepower combines, an articulated configuration is described, in which a rear grain cart housing the grain storage is connected to the PPU by means of an articulating joint assembly and bonus sieves assemblies for accepting grain from concaves and grates assemblies located forward of the bonus sieves assemblies are located in the outer rear of the PPU. For combines of smaller horsepower, a design is described in which the grain storage is positioned atop the PPU and bonus sieves for accepting grain from concaves and grates assemblies located forward of the bonus sieves assemblies are positioned in the outer rear of the combine. In both types of design, the bonus sieves assemblies accept tailings from the concaves and grates assemblies for additional separation of grain from material other than grain (MOG). New and separate airflow is provided for the bonus sieves in both types of design. The bonus sieves tailings are returned to the bonus sieves for re-threshing, optionally after being particulated and air separation performed.

Disclosed also is an improved sieve type cleaning system with increased functional area from its primary area commencing between the forward tires of the harvester to a wider width for the region behind said tires, continuing to near or beyond the effective rear of the separation and cleaning area of the harvester; this improved sieve type cleaning system may be applied to articulated combines, where the grain storage is positioned in a rear grain cart connected to the PPU by means of an articulating joint, as well as to traditional combines, where the grain storage is positioned on the PPU and no articulating joint is used. The extra threshing assemblies are structurally suspended for the wider sieve sections from the support structures of the major sieves in a manner that does not require these extra threshing sieves to be driven separately from the major sieves. Both upper and lower bonus sieves could be "co-shaken", i.e. shaken simultaneously in the same direction, in contrast to the opposing shake of the major sieves assemblies.

Alternatively, the bonus sieves could be shaken in opposition to each other and the major sieves, given proper structural allowances. The bonus sieve arrangement could be chosen to use only one layer of sieves, be it the bottom or top sieve only when suitable crop performance can be reached.

Dedicated fan assemblies are located apart from the major cleaning fan that are solely dedicated to providing air volume for the winnowing functions of the (wider) extended rear sections of sieves, i.e to the bonus sieves. Alternatively, bonus sieves could conceivably be driven by air from the primary fan, given proper ducting and given recognition of the extra air volume that the primary fan would have to provide.

The return of the tailings material via dual return elevators (described in detail below) to the front of the bonus sections of the sieve component, and in such a manner as to have a portion of the air from the bonus fans being used to remove lighter MOG from the material stream such that it does not fall onto the surface of the sieve(s), allows to effectively address the problem of returning tailings for further separation of grain from the material other than grain. The tailings material could be discharged into the airflow such that such tailings are splayed out into the air stream for a particulate material flow and are thusly particulately separated such that the air can act upon each particle of grain or MOG independently.

The splaying of the tailings material could be assisted by velocity imparted by centrifugal force from the return elevator assembly and centrifugal force.

The location of the bonus sieves adjacent to and below the separation area (commonly called "separation grates") of a rotary separator significantly increases the relative area of cleaning sieves in the section of the separator where increased MOG versus grain ratio can be expected, and as such prevents the unfortunate introduction of excess MOG onto the stratified flow in existence on the main sieves in this rearward section of the cleaning system.

### BRIEF DESCRIPTION OF THE DRAWINGS

For a fuller understanding of the nature and advantages of the present method and process, reference should be had to the following detailed description taken in connection with the accompanying drawings, in which:
Fig. 1 is a side view of an articulated harvesting combine fitted with the bonus sieves assembly disclosed herein;
Fig. 2 is a top view of the articulated harvesting combine of Fig. 1;
Fig. 3 is an isometric view of the left side of the articulated harvesting combine of Fig. 1;
Fig. 4 is a bottom isometric view of the left rear end of the forward unit of the articulated harvesting combine of Fig. 1 showing a portion of the disclosed bonus sieves assembly disclosed herein;
Fig. 5 is an isometric view of the right rear end of the forward unit of the articulated harvesting combine of Fig. 1 from underneath showing a portion of the disclosed bonus sieves assembly disclosed herein;
Fig. 6 is an isometric view of the left side of the forward unit of the articulated harvesting combine of Fig. 1 with the outer coverings or skins removed;
Fig. 7 is a sectional view taken along line 7-7 of Fig. 2;
Fig. 8 is a top view of the forward unit of the articulated harvesting combine of Fig. 1 with its internal components removed but for the sieves and bonus sieves assemblies;
Fig. 9 is a right side isometric view of the forward unit of the articulated harvesting combine of Fig. 1 with its internai components removed but for the sieves and bonus sieves assemblies;
Fig. 10 is a left side isometric view of the forward unit of the articulated harvesting combine of Fig. 1 with its internai components removed but for the sieves and bonus sieves assemblies;
Fig. 11 is a section view taken along line 11-11 of Fig. 8; and
Fig. 12 is a section view taken along line 12-12 of Fig. 8.
Fig. 13 is an isometric view of the rear side of a non-articulated harvesting combine fitted with the bonus sieves assembly disclosed herein, with the rear side being closed by a rear panel;
Fig. 14 is an isometric view of the rear side of the non-articulated harvesting combine of Fig. 13, with the rear side shown open;
Fig. 15 is an isometric view of the rear side of a tracked harvesting combine.

The drawings will be described in greater detail below.

### DETAILED DESCRIPTION OF THE INVENTION

First and foremost, in the case of large horsepower combines, the articulation architecture of the disclosed harvesting combine permits the power processing (front) unit (PPU) to contain much wider sieves starting at the front of the machine, because the separator frames are wider inasmuch as no rear steering tires/wheels are necessary.

This articulation architecture also allows the wider sieves to remain lower in the separator and still be below the threshing rotor. And equally as fortuitous for the sieve area is that, since there is no oscillating rear axle within the area of the separator, the sieves can be configured to be much wider once they progress rearward of the large front tires.

Considering in detail the operation of the sieves, the sieves are asked to accept the grain as well as the material other than grain (MOG) that is expelled by the rotor through the concaves and grates that are located directly above the sieves. The ability of the oscillating sieves and the air being pushed up through the sieves to suspend and remove the MOG from the grain is inversely and exponentially related to the quantity of MOG that is being introduced into the system versus the amount of grain introduced based on the measured thickness of the mat of materia) that is deposited onto the upper sieve. Concurrently, the difficulty of the mission is increased as the percentage of MOG to grain is increased, even to the point of "collapsing" the suspension of the mat by the cleaning fan. Resultant from this action is that grain will be entrained with the MOG and moved off the rear of the sieves, which is an undesirable result to be avoided.

In a typical harvesting combine, this grain and MOG is mixed and transported to the front of the sieves to allow a longer distance for the cleaning system to try and deal therewith. Alternatively, the grain rich mat at the front of the sieves becomes confused by the MOG rich material, if it is allowed to fall onto the sieves at the back of the rotor. In either case, the rear section of the sieves sees such a high MOG to grain ratio that it struggles to accomplish its task in a timely fashion and grain loss off the back of the separation system occurs.

Since the disclosed harvesting combine chooses to widen the sieves at the exact point where the separating grates begin, where (by definition of threshing and separating principles) the MOG to grain ratio of material being deposited increases precipitously, it provides increased sieve area so as effectively to deal with increasing sieve MOG loading. By so doing, the configuration avoids very heavy loading of the original width of sieves that still carries grain (mostly stratified by the sieving and winnowing nearer the front of the main sieves) and does not need high MOG confusing the situation.

However, a major contributor to the winnowing of the MOG from the grain is the activity of the air stream from the cleaning fan that serves to lift the MOG away from the heavier grain and transport it rearward to be dispatched out the rear of the machine as desired. With the widening of the width of the sieves, it cannot be practically expected that the air traveling down the middle section of the sieve to widens out abruptly and starts also flowing up through the novel disclosed bonus sieves. Instead, centrifugal style, narrow fans are located near the front of the widened chassis sections, directly under and in front of the widened area referred to as bonus sieves. These fans provide additional airflow to aid in the winnowing of the MOG from the grain in the bonus sieves.

### Structural and Power Transfer Considerations

As one increases the length side-to-side of the sieves at the rear of the separator, one increases exponentially the stresses that will be felt by the severely oscillating members of the sieves and supporting rails in an environment often expected to approach up to 3G accelerations. It must also be kept in mind that weight must be kept to a minimum in order to be able to shake the sieves aggressively. For these reasons, and other reasons of space concerns, the bonus sieves are attached to the upper sieve rails, and both top and bottom bonus sieves are shaken by the motion of the top main sieve. The contrast is that the main sieves have opposing shake pattern, in that as the top one moves forward, the bottom one moves rearward, a situation common to the combine function for reasons not needed in this discussion.

With this configuration and shake motion, it has been chosen to attach the bonus sieves to the upper sieve rails where the motion is more aggressive. To accommodate the added weight of the bonus structures, the upper sieve are suspended with three hangers, as opposed to the customary two. All of these hangers attach to the main sieve rails, which results in the bonus sieves being cantilevered off the sides of the rear of the rails. The bonus sieves are placed one above the other, with a short grain pan under the front of the lower sieve on each side to deliver grain to the clean grain cross auger. The sieves are identical in geometry to allow universal fitting top versus bottom.

An important structural feature is the cantilevered tubular section that extends from the sidewall (where the wall turns outward to allow the bonus area) rearward to a point significantly rearward of its attachment to the wall. This allows the structure to extend out over the sieves far enough to allow the rear hanger to be more near the rear of the rails for better oscillation support. Quite importantly, the top surface of the decreasing shape of the tube structure is descending significantly downward such that longer stringing material discharged by the rotor will be induced to move rearward on its top surface to prevent this protrusion from becoming a location of residue plugging by hair-pinning on top.

In the case of both upper and lower sieves and rails, the force used for oscillation of the sieves will be applied to the main rails of the sieves, and not at the outside of the bonus sieve rails. This avoids trying to transmit the oscillation forces through the outside bonus rails, and then around the sharp corners of the front of the bonus area, into the main rails. Such attempts to make the structure robust to the fully reversing oscillation drives would prove futile, or at best very heavy and costly. It should be appreciated, however, that additional modes of implementing the precepts disclosed herein will be readily apparent to the skilled artisan based on the present disclosure.

### Tailings Return

The disclosed design will accomplish the return-to-sieve function in a different manner than is currently practiced. We will gather the material at the rear of the lower sieve as typical in an auger trough, and as less typically transfer the material toboth sides of the separator. At the outer wall of the separator, and between the double walls unique to the disclosed design in this area, a typical roller chain with paddles will move the material up between the walls on a slide that will deliver it to the front of the bonus sieves. These paddles will be backswept in attitude such that they will roll the material while dragging it up the slope to cause a threshing action against the slide, which also can be made to be rough and abrasive to the material. Additionally, the flights of the tailings augers will be backward sloped in their spirai to also cause pinching and rolling of the grain against the wall of the auger trough.

As the material is introduced at the top of the miniature elevators, it will be slung outward by centrifugai force as the chain paddle travels around the upper sprocket. The wall of the upper cavity is sloped to deflect the material inward toward the sieve surfaces. it then will be hit by a blast of air from the bonus fans that will effect a pneumatic pre-cleaning of the MOG from the heavier grain that will propel the MOG out the rear of the separation chamber, while the heavier grain is less effected and will fall to the sieves for separation and cleaning.

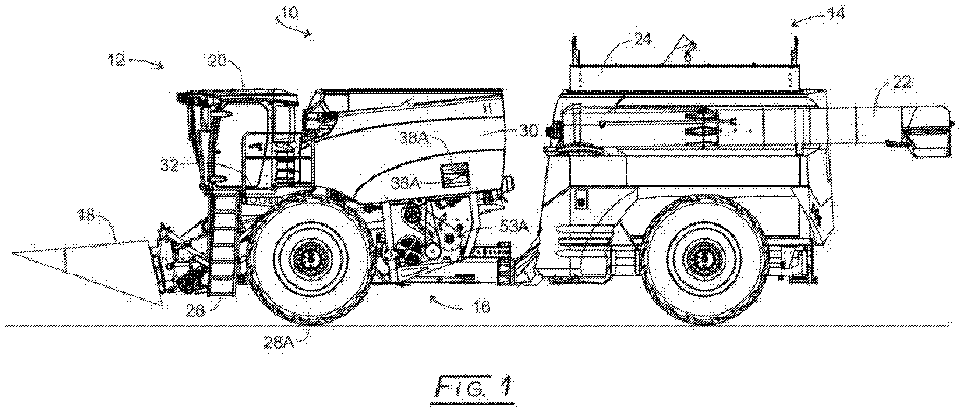

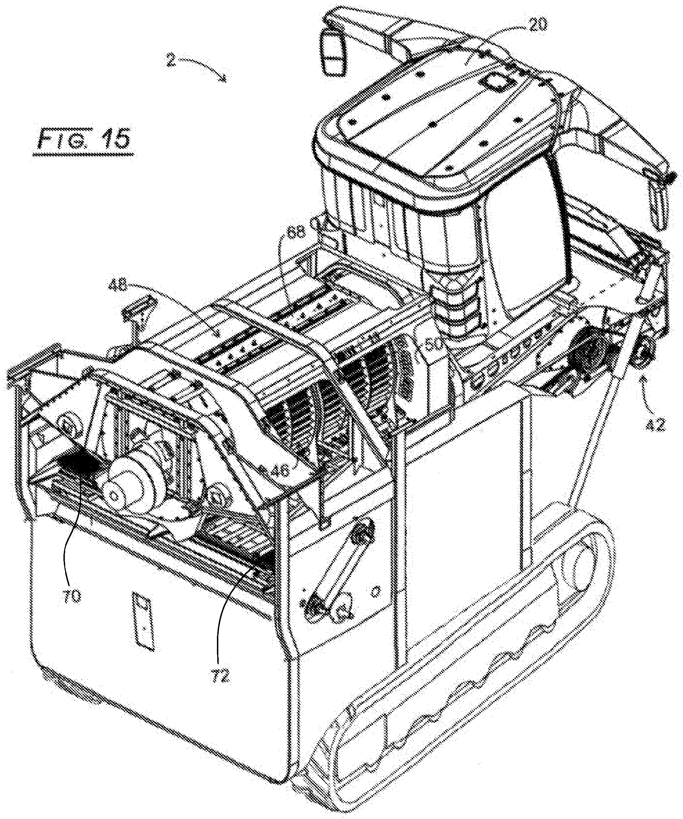

Referring now to the drawings and specifically referring initially to Figs. 1, 2, and 3, an articulated harvester, 10, consists of a powered PPU, 12, a rear grain cart, 14, and an articulation joint, 16, that connects PPU 12 with rear grain cart 14. The details of articulation joint 16 are disclosed in commonly owned application serial number 14/946,827 filed November 20, 2015. PPU 12 carries a grainhead, 18, operator's cab, 20, grain cleaning and handling assembly, and engines. PPU 12 is devoid of any grain storage, such being exclusive in rear grain cart 14. While both PPU 12 and rear grain cart 14 are shown being carried by wheel assemblies, one or both could be tracked, as illustrated for example in Fig. 15. A screened air iniet, 15, is located atop PPU 12 where the airlikely is the cleanest around harvesting combine 10. A radiator cap, 17, and engine exhaust, 19, are located behind screened air iniet 15.

An off-loading auger assembly, 22, is in the folded home position and being carried by rear grain cart 14. Grain cart 14 also bears a foldable roof, 24, shown in an open position, but which can fold inwardly to cover grain stored in rear grain cart 14. Foldable roof 24 may be made of metal, plastic, or other suitable material, butmay be made of durable plastic for weight reduction and easy folding/unfolding. A grain storage bin is carried by grain cart 14 and may be made of plastic also in keeping with desirable weight reduction; although, it could be made of metal also at the expense of weight. All plastic parts may be filled with particulate or fiber reinforcement in conventional fashion and could be laminate in construction. Further details on rear grain cart 14 can be found commonly owned application serial number 14/946,842 filed November 20, 2015.

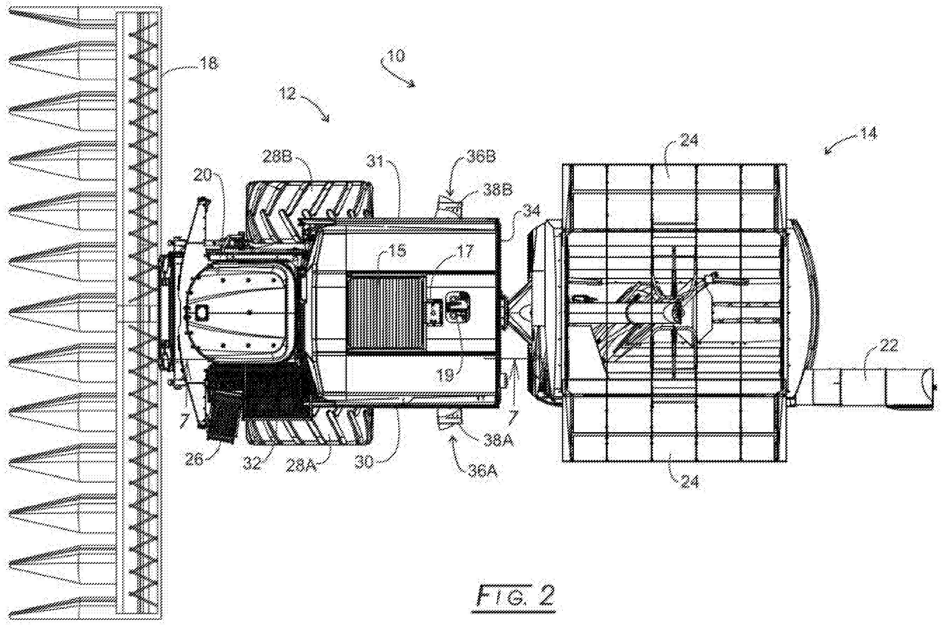

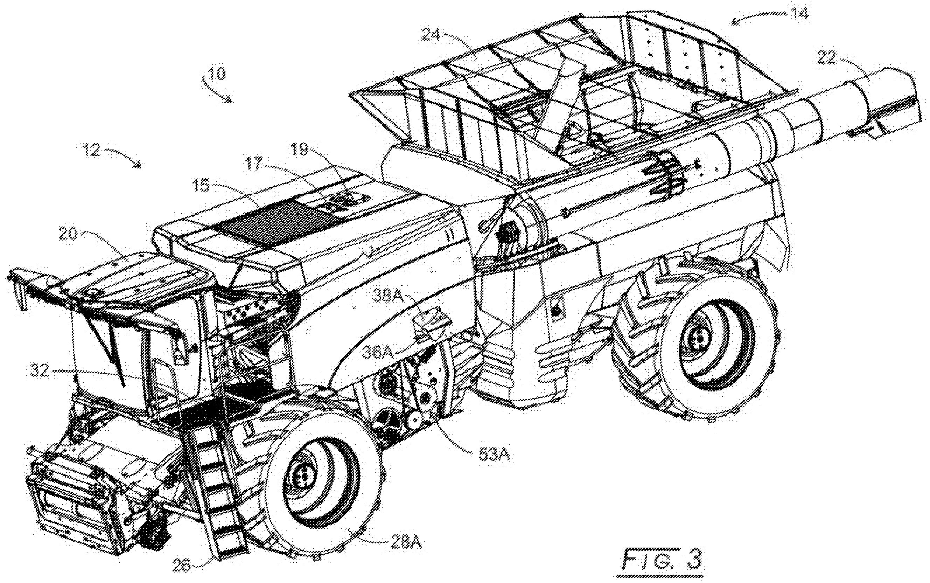

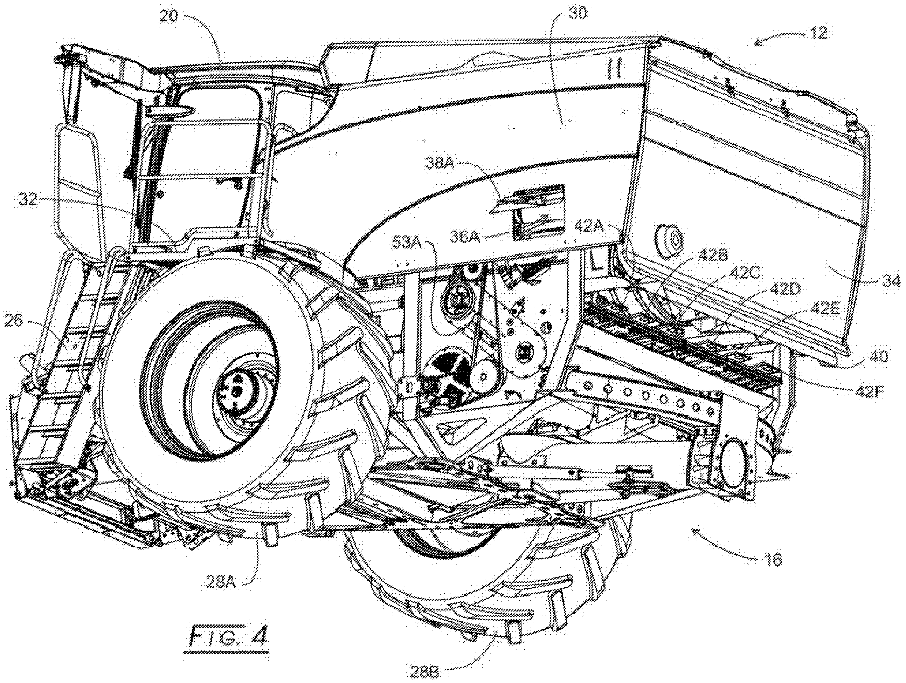

Referring now to Figs. 3 and 4, the operator is granted access to cab 20 by astair assembly, 26, that extends upwardly from just above the ground and will be more fully disclosed in commonly owned application serial number, filed (62/375,986 filed August 17, 2016; attorney docket DIL 2-035). PPU 12 is supported by wheel assemblies, 28A and 28B (Fig. 2). A movable side panel, 30, grants access to the operator or mechanic to the internai mechanisms housed with in PPU 12 from stair assembly 26 and a platform, 32, and retains a foldable platform movable from a vertical home position while the panels are in piace to a horizontal active position when the panels are moved away. Such foldable platform mates with platform 32. The movable side panel is more particularly disclosed in commonly owned application serial number 62/376,512 filed August 18, 2016 (attorney docket no. DIL 2-037).

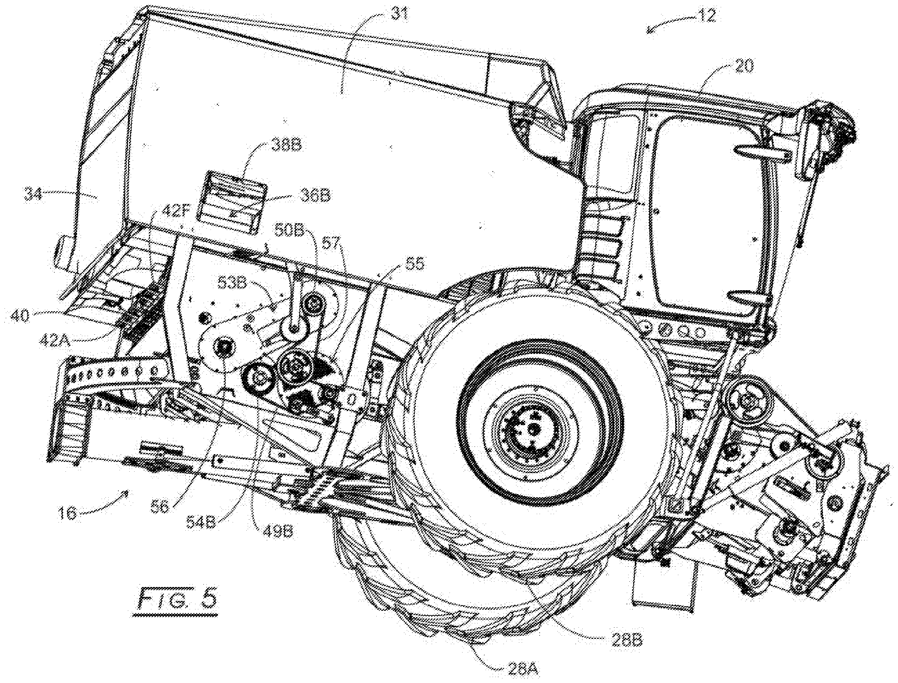

In Fig. 4, a rear panel, 34, covers the back of PPU 12. Panels 30, 31 (see Fig. 5), and 34 only extend downwardly to cover about one-half of the height of PPU 12, allowing access to the exposed internal components for repairs, maintenance, and like occasions. Towards the rear of both panels 30 and 31 are MOG outlets, 36A and 36B, respectively, having top deflector plates, 38A and 38B, respectively.

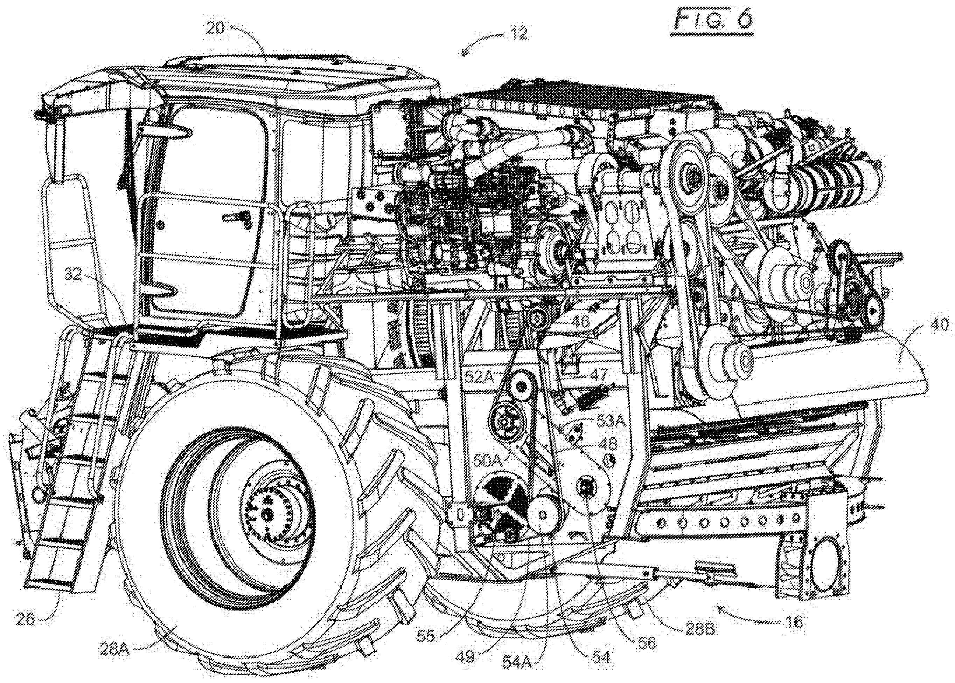

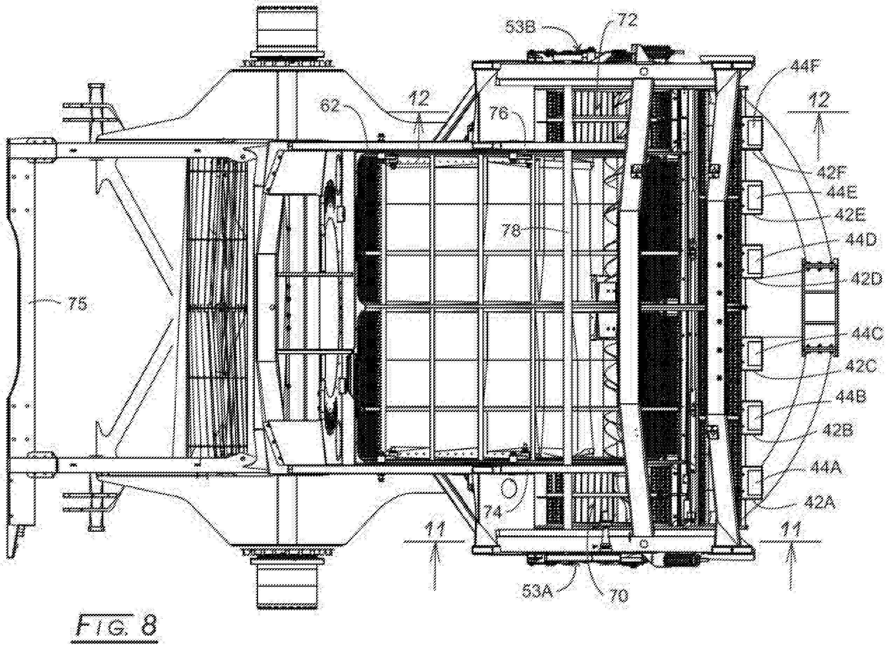

These deflector plates are adjustable for determining the location for depositing MOG expelled from the disclosed bonus sieves assemblies. MOG discharged from the rear of PPU 12 strikes a deflector, 40 (see also Fig. 6), to direct the MOG downwardly and not at grain cart 14. Six extensions, 42A - 42F, terminated by sensors, 44A - 44F (see also Fig. 8), respectively, are located just before hood 40 and provide additional data to the operator. Referring now additionally to Fig. 6 where the top, rear, and side fascias have been removed, a gearbox and drive assembly for the bonus sieves, 46, is located on left side of PPU 12. A belt, 48, transfers the power from drive assembly 46 in a counter-clockwise direction around bonus sieves drive shaft pulley, 50A (for bonus sieves feed conveyor assemblies 53A and 53B) an idier pulley, 52A, a grain auger drive assembly pulley, 54, and back to drive assembly 46 around tensioner 47.

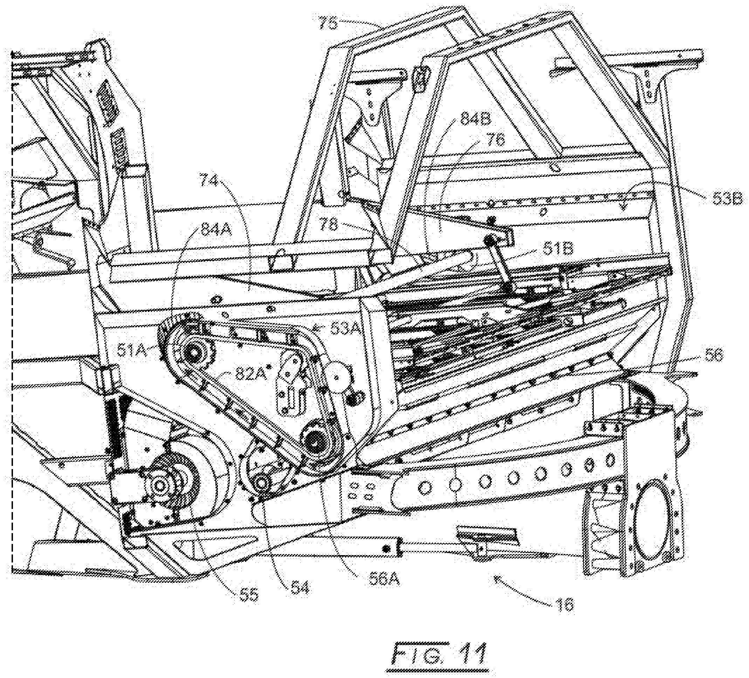

Another belt, 49A, runs from pulley assembly 54A (for grain auger drive assembly 54) to a fan assembly, 55, supplying airflow to the bonus sieves assemblies. Referring to Fig. 5, bonus sieves drive pulley 50A is connected to a shaft, 78 (see Fig. 11), to a bonus sieves drive pulley, 50B on the right side of PPU 12. A conveyor/auger assembly, 56, has flights that pull tailings from the center to both the right side and to the left side of PPU 12 for delivering tailings outwardly into bonus sieves conveyer assemblies 53A and 53B. A grain auger drive assembly 54 connects pulley assembly 54A on the left side to a pulley assembly, 54B, on the right side on PPU 12. Belts, 57 and 49B, connect the various pulley assemblies on the right side of PPU 12, as shown in Fig. 5.

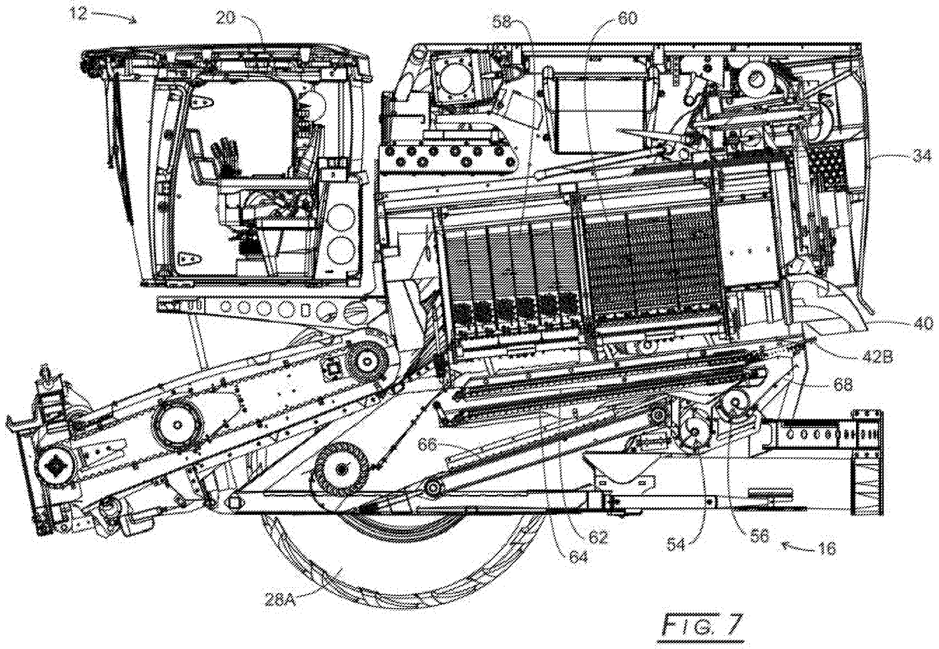

In Fig. 7, concaves, 58, and grates, 60, are seen housed within PPU 12. Below the concaves and grates are a pair of stacked, shaken sieves assemblies, 62 and 64, where an air fluidized, grain-rich mat, is shaken with heavier grain falling downwardly and lighter MOG carried away by the fluidizing air flow, all in conventional fashion.

The heavier grain falls down through the two sieves assemblies down onto a conveyor, 66, for movement rearwardly and downwardly to be transferred to rear grain cart 14. A wall, 68, catches heavier tailing material that is blown from the sieves assemblies and directs the heavier tailings down to the tailing auger assembly 56. The remaining MOG is blown out the rear of PPU 12 and directed downwardly by hood 40.

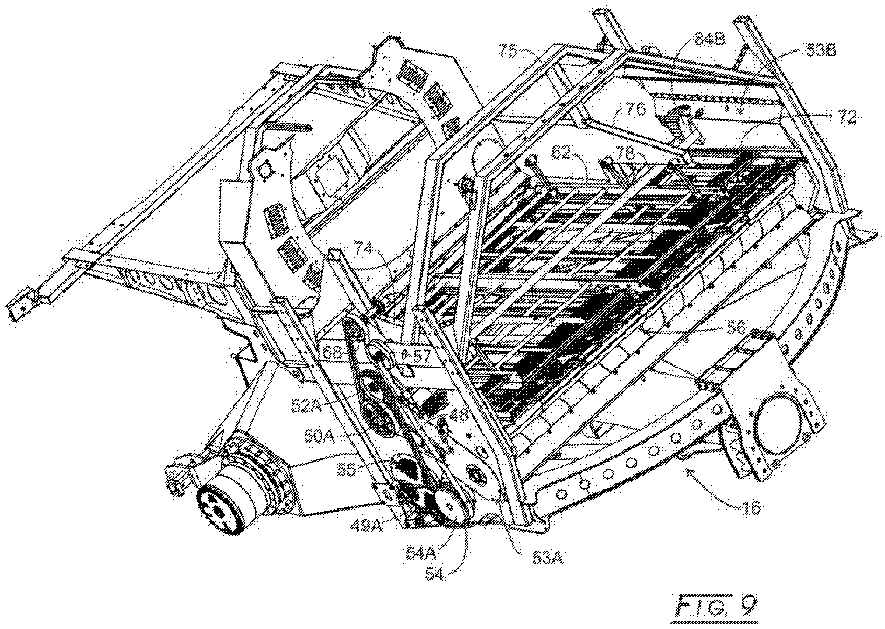

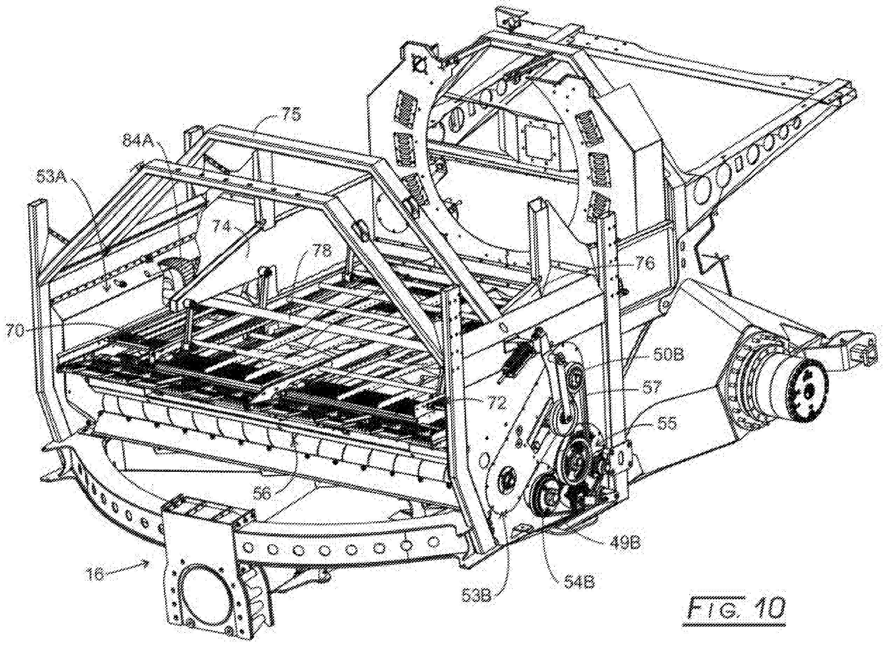

Bonus sieves assemblies, 70 and 72, can be seen in Fig. 8 and are hung rails, 74 and 76, which also support upper sieves assembly 62 resulting in bonus sieves assemblies 70 and 72 being oscillated or shaken in concert with upper sieves assembly 62. The extra width of PPU 12 will be appreciated in Fig. 8 and, as stated above, results from the absence of rear (steering) wheels for PPU 12 by virtue of the articulated design. Bonus sieves assemblies 70 and 72 being also are seen in Figs. 9 and 10, respectively, along with frame assembly, 75. In Fig. 8 and other figures, much of the bonus sieves have not been completely shown to be sieves so as to not have too much blackened area. The ends of the sieves typically are shown as "sieves", however.

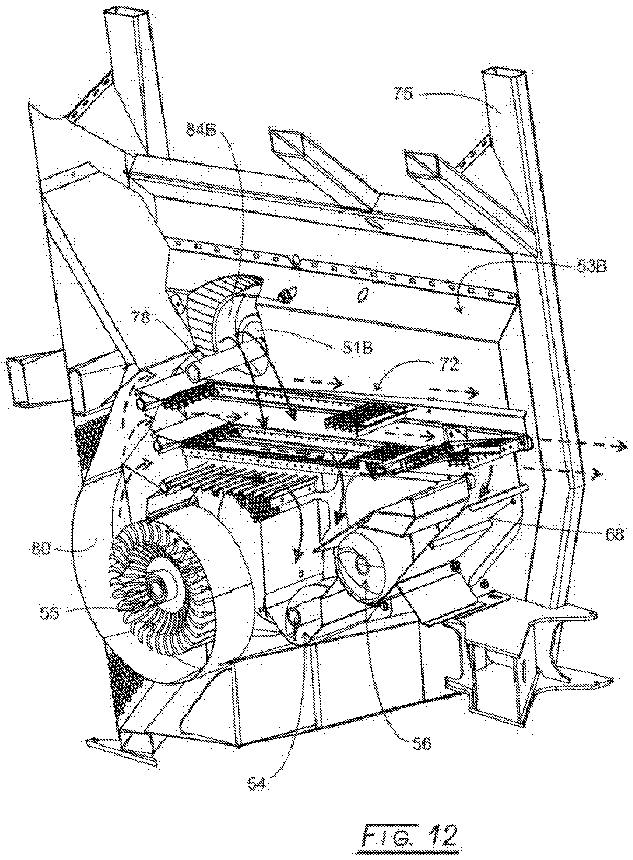

Fig. 11 reveals conveyor assemblies 53A and 53B for the bonus sieves assemblies 70 and 72, including, *inter alla,* bonus sieves drive pulleys 50A and 50B connected to shaft 78. Conveyor assembly drive sprockets 51A and 51B also connect to shaft 78. Fig. 11 also reveals fan assembly 55, tailing auger assembly 56, and grain auger drive assembly 54. Grain auger assembly 56 is driven by sprockets, 56A and 56B. The return tailings are fed to the bonus sieves conveyors 53A and 53B by tailing auger assembly 56 through openings next to sprockets 56A and 56B. The tailings then are conveyed upwardly by conveyor chain paddle assemblies, 82A and 82B, to openings, 84A and 84B, (not shown) behind sprockets 51A and 51B. These openings 84A and 84B are shaped so that the tailings are directed onto bonus sieves 70 and 72. Fan assembly 55 is revealed in further detail in Fig. 12. It will be seen to include a curvilinear director assembly, 80, that directs an airtlow (dotted arrows being airtlow in Fig. 12, while solid arrows shows material flow) towards the bonus sieves assemblies for removal of lighter MOG material while letting heavier grain fall down through the bonus sieves 70 and 72 and into auger assembly 54. ft will be observed that material (tailings from concaves 58 and grates 60) from grain auger drive conveyor assemblies 53A and 53B moves downwardly onto bonus sieves assembly 72 for additional grain recovery with separated grain falling into auger assembly 54.

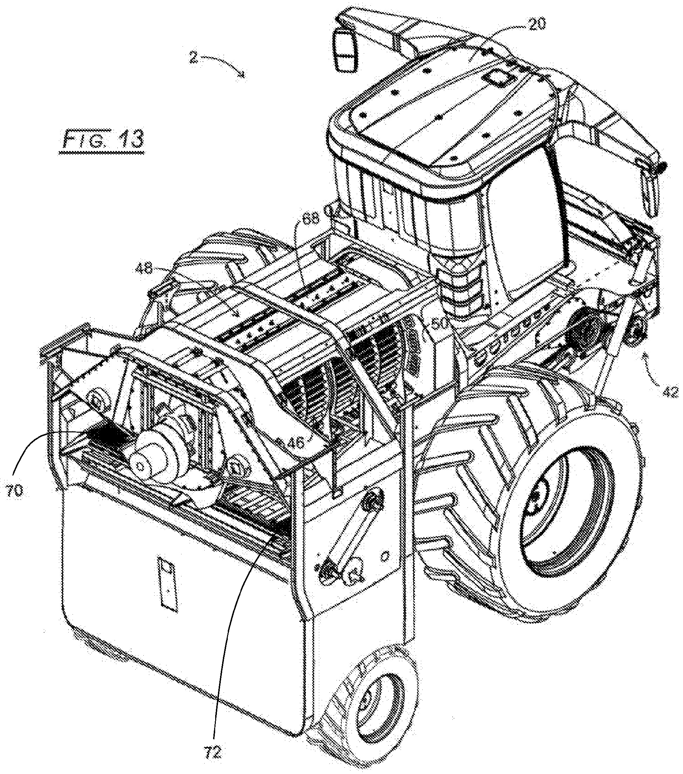

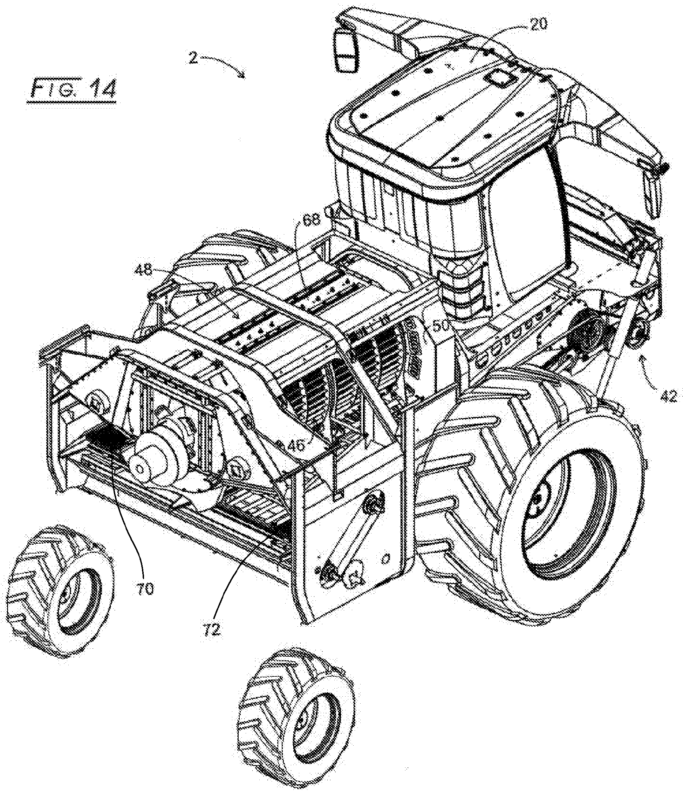

Although the discussion so far has focused on an articulated design, which has proved particularly effective for increasing the cleaning sieve area in harvesting combines having large horsepower, the inventive concepts of the present application, namely the addition of bonus sieves at the outer sides of the main cleaning area and the system of returning tailings to the bonus sieves, may be also applied to traditional combines of the non-articulated type, as shown in Figs. 13 and 14, where the position of the bonus sieves is indicated by the numerals 70 and 72. As traditional combines have smaller rear wheels, it is generally possible to add the bonus sieves at the outer rear of the combine in accordance with the inventive concept of the present application, thereby increasing the cleaning area while still maintaining the sieves below the concaves and grates assemblies.

If required, for example if the clearance between the rear tires is small, as is the case for combines having small horsepower, the bonus sieves may be positioned at the outer rear of the combine (at the end of the cleaning area opposite the concaves and grates assemblies) at a position higher than the concaves and grates assemblies; in such a case, it will be apparent to the skilled artisan that a sloped conveyor for carrying grain will be required.

The embodiments discussed above illustrate harvesting combines having two sets of wheels; however, the inventive concept of the present application can also be applied to tracked harvesting combines (crawlers), as illustrated in Fig. 15. As the tracks used for advancing the combine have a small height, it is possible to position bonus sieves 70 and 72 at the outer rear side of the combine, such that the bonus sieves overhang, i.e. project over the tracks, in accordance with the general teaching of the present invention.

As explained, the same fan assembly for providing a dedicated airflow to the bonus sieves, illustrated above in Fig. 12 in the case of an articulated combine, can be included in a traditional combine of the type shown in Figs. 13 and 14 as well as in the tracked combine harvester illustrated in Fig. 15.

While the apparatus has been described with reference to various embodiments, those skilled in the art will understand that various changes may be made in the limit of the wording of the appended claims.

Therefore, it is intended that the disclosure not be limited to the particular embodiments disclosed, but that the disclosure will include all embodiments falling within the wording of the appended claims. In this application all units are in the metric system and all amounts and percentages are by weight, unless otherwise expressly indicated.

## Claims

1. Harvesting combine (10) having a forward end, a rear end and opposite outer sides extending longitudinally between the forward end and the rear end, the harvesting combine (10) comprising:
a power processing unit (12) having a forward end and a rear end, wherein the power processing unit (12) is positioned at the forward end of the harvesting combine (10) and includes a concaves and grates assembly (58, 60) for threshing grain from material other than grain;
a grain storage for storing threshed grain;
a driving axle for drivingly supporting a set of wheels (28A, 28B) or a set of tracks so that the wheels or the tracks are maintained at a separation distance;
main sieve assemblies (62, 64) arranged to receive grain and tailings from the concaves and grates assembly (58, 60), wherein the tailings are unthreshed material output from the concaves and grates assembly (58, 60) and primarily composed of material other than grain, the main sieve assemblies (62, 64) being adapted to separate grain from material other than grain of the tailings,
wherein the main sieve assemblies (62, 64) extend over a primary separation and cleaning area longitudinally bounded between the concaves and grates assembly (58, 60) and the rear end of the harvesting combine (10) and transversely bounded between the opposite outer sides of the harvesting combine (10), the primary separation and cleaning area having a transverse width smaller than the separation distance, such that the said primary separation and cleaning area is comprised between opposite boundaries spaced by the said transverse width,
wherein
the harvesting combine (10) comprises additional sieve assemblies (70, 72) arranged to receive tailings from the concaves and grates assemblies (58, 60) and from the main sieve assemblies (62, 64) and adapted to perform additional separation of grain from the material other than grain,
wherein the additional sieve assemblies (70, 72) are arranged between the concaves and grates assembly (58, 60) and the rear end of the harvesting combine (10) at the outer sides of said combine (10) so as to extend transversally beyond the boundaries of the primary separation and cleaning area, thereby defining an additional separation and cleaning area,
**characterised in that** the additional separation and cleaning area extends longitudinally beyond the rear end of the primary separation and cleaning area

2. Harvesting combine (10) according to claim 1, wherein the additional sieve assemblies (70, 72) are arranged at the outer sides of the combine (10) at the rear end of the power processing unit (12), so that the rear end of the power processing unit (12) is wider than the front end of the power processing unit (12).

3. Harvesting combine (10) according to claim 2, further comprising a grain rear cart (14) positioned between the rear end of the power processing unit (12) and the rear end of the harvesting combine (10) and configured to house the grain storage, wherein the grain cart (14) is connected to the rear end of the power processing unit (12) by means of an articulated joint (16).

4. Harvesting combine (10) according to claim 1, wherein the additional sieve assemblies (70, 72) are arranged at the outer sides of the combine (10) at the rear end of the harvesting combine (10), so that the rear end of the harvesting combine (10) is wider than the front end of the harvesting combine (10).

5. Harvesting combine (10) according to any of the preceding claims, wherein each of the main sieve assemblies (62, 64) and each of the additional sieve assemblies (70, 72) respectively comprises a lower sieve and an upper sieve stacked on the lower sieve.

6. Harvesting combine (10) according to claim 5, further comprising a support frame (74, 76) configured to support each of the upper sieves of the main sieve assemblies (62, 64) and further configured to support the additional sieve assemblies (70, 72).

7. Harvesting combine (10) according to claim 6, further comprising driving means for oscillating the support frame (74, 76), whereby the additional sieve assemblies (70, 72) may be shaken simultaneously with the upper sieves of the main sieve assemblies (62, 64).

8. Harvesting combine (10) according to any of the preceding claims, further comprising dedicated fan assemblies (55) configured to supply a flow of air solely to the additional sieve assemblies (70, 72) for removing material other than grain.

9. Harvesting combine (10) according to any of claims 1 to 7, further comprising a primary fan assembly configured to supply a flow of air to the main sieve assemblies (62, 64) as well as to additional sieve assemblies (70, 72) for removing material other than grain.

10. Harvesting combine (10) according to any of the preceding claims, further comprising return elevators (50A, 51A, 53A, 56A; 50B, 51B, 53B, 56B) adjacent to a respective additional sieve assembly (70, 72), wherein each return elevator (50A, 51A, 53A, 56A, 82A; 50B, 51B, 53B, 56B, 82B) is arranged to receive tailings from the main sieve assemblies (62, 64) and to return the said tailings to its respective additional sieve assembly (70, 72) for performing further separation of grain from material other than grain of the returned tailings in the respective additional sieve assembly (70, 72).

11. Harvesting combine (10) according to claim 10, further comprising a tailing auger assembly (56) arranged to receive the tailings from the main sieve assemblies (62, 64) and to return the said tailings to the additional sieve assemblies (70, 72) by conveying the return tailings to openings (84A, 84B) formed in the outer sides of the harvesting combine (10) and in communication with the additional sieve assemblies (70, 72).

12. Harvesting combine (10) according to claim 11, wherein each return elevator (50A, 51A, 53A, 56A; 50B, 51B, 53B, 56B) comprises a conveyor (53A, 53B) for conveying and directing the return tailings from the openings (84A, 84B) to the additional sieve assemblies (70, 72).

## Patentansprüche

1. Mähdrescher (10) aufweisend ein vorderes Ende, ein hinteres Ende und gegenüberliegende Außenseiten, die sich in Längsrichtung zwischen dem vorderen Ende und dem hinteren Ende erstrecken, wobei der Mähdrescher (10) umfasst:
eine Kraftverarbeitungseinheit (12) aufweisend ein vorderes Ende und ein hinteres Ende, wobei die Kraftverarbeitungseinheit (12) am vorderen Ende des Mähdreschers (10) positioniert ist und eine Dreschkorb- und Rostanordnung (58, 60) zum Dreschen von Getreide aus anderem Material als Getreide enthält;
einen Getreidespeicher zum Speichern von gedroschenem Getreide;
eine Antriebsachse zum antriebsmäßigen Tragen eines Satzes von Rädern (28A, 28B) oder eines Satzes von Raupen, so dass die Räder oder die Raupen in einem Trennabstand gehalten werden;
Hauptsiebanordnungen (62, 64), die so angeordnet sind,
dass sie Getreide und Überreste von der Dreschkorb- und
Rostanordnung (58, 60) empfangen, wobei die Überreste nicht gedroschenes Material sind, das von der Dreschkorb- und Rostanordnung (58, 60) ausgegeben wird und hauptsächlich aus anderem Material als Getreide besteht, wobei die Hauptsiebanordnungen (62, 64) dafür ausgelegt sind, Getreide von anderem Material als das Getreide der Überreste zu trennen,
wobei sich die Hauptsiebanordnungen (62, 64) über einen primären Trenn- und Reinigungsbereich erstrecken, der in Längsrichtung zwischen der Dreschkorb- und Rostanordnung (58, 60) und dem hinteren Ende des Mähdreschers (10) begrenzt ist und zwischen den gegenüberliegenden Außenseiten des Mähdreschers (10) quer begrenzt sind,
wobei der primäre Trenn- und Reinigungsbereich eine Querbreite kleiner als der Trennabstand aufweist, sodass der primäre Trenn- und Reinigungsbereich zwischen gegenüberliegenden Grenzen umfasst ist, die durch die Querbreite beabstandet sind,
wobei der Mähdrescher (10) zusätzliche Siebanordnungen (70, 72) umfasst, die so angeordnet sind, dass sie Überreste von den Dreschkorb- und Rostanordnungen (58, 60) und von den Hauptsiebanordnungen (62, 64) empfangen und ausgelegt sind, um eine zusätzliche Trennung von Getreide von dem anderen Material als Getreide durchzuführen,
wobei die zusätzlichen Siebanordnungen (70, 72) zwischen der Dreschkorb- und Rostanordnung (58, 60) und dem hinteren Ende des Mähdreschers (10) an den Außenseiten des Mähdreschers (10) so angeordnet sind, dass sie sich quer über die Grenzen des primären Trenn- und Reinigungsbereiches erstrecken, wodurch ein zusätzlicher Trenn- und Reinigungsbereich definiert wird,
**dadurch gekennzeichnet, dass** sich der zusätzliche Trenn- und Reinigungsbereich in Längsrichtung über das hintere Ende des primären Trenn- und Reinigungsbereichs hinaus erstreckt.

2. Mähdrescher (10) nach Anspruch 1, wobei die zusätzlichen Siebanordnungen (70, 72) an den Außenseiten des Mähdreschers (10) am hinteren Ende der Kraftverarbeitungseinheit (12) angeordnet sind, so dass das hintere Ende der Kraftverarbeitungseinheit (12) breiter ist als das vordere Ende der Kraftverarbeitungseinheit (12).

3. Mähdrescher (10) nach Anspruch 2, ferner umfassend einen Getreidehinterwagen (14), der zwischen dem hinteren Ende der Kraftverarbeitungseinheit (12) und dem hinteren Ende des Mähdreschers (10) positioniert ist und konfiguriert ist, um den Getreidespeicher unterzubringen, wobei der Getreidewagen (14) mit dem hinteren Ende der Kraftverarbeitungseinheit (12) mittels einer Gelenkverbindung (16) verbunden ist.

4. Mähdrescher (10) nach Anspruch 1, wobei die zusätzlichen Siebanordnungen (70, 72) an den Außenseiten des Mähdreschers (10) am hinteren Ende des Mähdreschers (10) angeordnet sind, so dass das hintere Ende des Mähdreschers (10) breiter ist als das vordere Ende des Mähdreschers (10).

5. Mähdrescher (10) nach einem der vorhergehenden Ansprüche, wobei eine jede der Hauptsiebanordnungen (62, 64) und eine jede der zusätzlichen Siebanordnungen (70, 72) jeweils ein unterseitiges Sieb und ein oberseitiges Sieb umfassen, die auf dem unterseitigen Sieb gestapelt ist.

6. Mähdrescher (10) nach Anspruch 5, ferner umfassend einen Stützrahmen (74, 76), der konfiguriert ist, um ein jedes der oberseitigen Siebe der Hauptsiebanordnungen (62, 64) zu stützen, und ferner konfiguriert ist, um die zusätzlichen Siebanordnungen (70, 72) zu stützen.

7. Mähdrescher (10) nach Anspruch 6, ferner umfassend Antriebsmittel zum Schwingen des Stützrahmens (74, 76), wodurch die zusätzlichen Siebanordnungen (70, 72) gleichzeitig mit den oberseitigen Sieben der Hauptsiebanordnungen (62, 64) geschüttelt werden können.

8. Mähdrescher (10) nach einem der vorhergehenden Ansprüche, ferner umfassend dedizierte Gebläseanordnungen (55), die konfiguriert sind, um einen Luftstrom ausschließlich zu den zusätzlichen Siebanordnungen (70, 72) zu liefern, um anderes Material als Getreide zu entfernen.

9. Mähdrescher (10) nach einem der Ansprüche 1 bis 7, ferner umfassend eine Primärgebläseanordnung, die konfiguriert ist, um den Hauptsiebanordnungen (62, 64) sowie zusätzlichen Siebanordnungen (70, 72) einen Luftstrom zu liefern, um anderes Material als Getreide zu entfernen.

10. Mähdrescher (10) nach einem der vorhergehenden Ansprüche, ferner umfassend Rücklaufheber (50A, 51A, 53A, 56A; 50B, 51B, 53B, 56B) angrenzend an eine jeweilige zusätzliche Siebanordnung (70, 72), wobei ein jeder Rücklaufheber (50A, 51A, 53A, 56A, 82A; 50B, 51B, 53B, 56B, 82B) so angeordnet ist, dass er Überreste von den Hauptsiebanordnungen (62, 64) empfängt und die Überreste zu seiner jeweiligen zusätzlichen Siebanordnung (70, 72) zurückführt, um eine weitere Trennung von Getreide von anderem Material als das Getreide der zurückgeführten Überreste in der jeweiligen zusätzlichen Siebanordnung (70, 72) durchzuführen.

11. Mähdrescher (10) nach Anspruch 10, ferner umfassend eine Überrestschneckenanordnung (56), die so angeordnet ist, dass sie die Überreste von den Hauptsiebanordnungen (62, 64) empfängt und die Überreste zu den zusätzlichen Siebanordnungen (70, 72) durch Befördern der rücklaufenden Überreste zu Öffnungen (84A, 84B) zurückführt, die in den Außenseiten des Mähdreschers (10) ausgebildet sind und mit den zusätzlichen Siebanordnungen (70, 72) in Kommunikation stehen.

12. Mähdrescher (10) nach Anspruch 11, wobei ein jeder Rücklaufheber (50A, 51A, 53A, 56A; 50B, 51B, 53B, 56B) einen Förderer (53A, 53B) zum Fördern und Leiten der rücklaufenden Überreste aus den Öffnungen (84A, 84B) zu den zusätzlichen Siebanordnungen (70, 72) umfasst.

## Revendications

1. Moissonneuse-batteuse (10) comportant une extrémité avant, une extrémité arrière et des côtés extérieurs opposés se prolongeant longitudinalement entre l'extrémité avant et l'extrémité arrière, la moissonneuse-batteuse (10) comprenant :
une unité de traitement d'énergie (12) comportant une extrémité avant et une extrémité arrière, dans laquelle l'unité de traitement d'énergie (12) est positionnée à l'extrémité avant de la moissonneuse-batteuse (10) et
inclut un assemblage de contre-batteurs et de grilles (58, 60) pour battre le grain à partir d'un matériau autre que le grain ;
un stockage de grains servant à stocker le grain battu ;
un essieu moteur servant à supporter en entraînement un ensemble de roues (28A, 28B) ou un ensemble de chenilles de sorte que les roues ou les chenilles sont maintenues à une certaine distance de séparation ;
des assemblages de tamis principaux (62, 64) disposés pour recevoir du grain et des otons provenant de l'ensemble de contre-batteurs et de grilles (58, 60),
dans laquelle les otons sont des matériaux non battus sortant de l'assemblage de contre-batteurs et de grilles (58, 60) et principalement composés de matériaux autres que du grain, les assemblages de tamis principaux (62, 64) étant adaptés pour séparer le grain du matériau autre que le grain des otons,
dans laquelle les assemblages de tamis principaux (62, 64) se prolongent sur une zone de séparation et de nettoyage principale délimitée longitudinalement entre l'assemblage de contre-batteurs et de grilles (58, 60) et l'extrémité arrière de la moissonneuse-batteuse (10) et délimitée transversalement entre les côtés extérieurs opposés de la moissonneuse-batteuse (10), la zone de séparation et de nettoyage principale ayant une largeur transversale inférieure à la distance de séparation, de sorte que ladite zone de séparation et de nettoyage principale est comprise entre des limites opposées espacées par ladite largeur transversale,
dans laquelle la moissonneuse-batteuse (10) comprend des assemblages de tamis supplémentaires (70, 72) disposés pour recevoir les otons des assemblages de contre-batteurs et de grilles (58, 60) et des assemblages de tamis (62, 64) principaux et adaptés pour effectuer une séparation supplémentaire du grain de la matière autre que le grain,
dans laquelle les assemblages de tamis supplémentaires (70, 72) sont disposés entre l'assemblage de contre-batteurs et de grilles (58, 60) et l'extrémité arrière de la moissonneuse-batteuse (10) sur les côtés extérieurs de ladite moissonneuse-batteuse (10) de manière à se prolonger transversalement au-delà des limites de la zone de séparation et de nettoyage principale, définissant ainsi une zone de séparation et
de nettoyage supplémentaire,
**caractérisée en ce que** la zone de séparation et de nettoyage supplémentaire se prolonge longitudinalement au-delà de l'extrémité arrière de la zone de séparation et de nettoyage principale.

2. Moissonneuse-batteuse (10) selon la revendication 1, dans laquelle les assemblages de tamis supplémentaires (70, 72) sont disposés sur les côtés extérieurs de la moissonneuse-batteuse (10) à l'extrémité arrière de l'unité de traitement d'énergie (12), de sorte que l'extrémité arrière de l'unité de traitement d'énergie (12) est plus large que l'extrémité avant de l'unité de traitement d'énergie (12).

3. Moissonneuse-batteuse (10) selon la revendication 2, comprenant de plus un chariot arrière à grains (14) positionné entre l'extrémité arrière de l'unité de traitement d'énergie (12) et l'extrémité arrière de la moissonneuse-batteuse (10) et configuré pour abriter le stockage de grains, dans laquelle le chariot à grains (14) est relié à l'extrémité arrière de l'unité de traitement d'énergie (12) au moyen d'un joint articulé (16) .

4. Moissonneuse-batteuse (10) selon la revendication 1, dans laquelle les assemblages de tamis supplémentaires (70, 72) sont disposés sur les côtés extérieurs de la moissonneuse-batteuse (10) à l'extrémité arrière de la moissonneuse-batteuse (10), de sorte que l'extrémité arrière de la moissonneuse-batteuse (10) est plus large que l'extrémité avant de la moissonneuse-batteuse (10).

5. Moissonneuse-batteuse (10) selon l'une quelconque des revendications précédentes, dans laquelle chacun des assemblages de tamis principaux (62, 64) et chacun des assemblages de tamis supplémentaires (70, 72) comprend respectivement un tamis inférieur et un tamis supérieur empilé sur le tamis inférieur.

6. Moissonneuse-batteuse (10) selon la revendication 5, comprenant de plus un cadre de support (74, 76) configuré pour supporter chacun des tamis supérieurs des assemblages de tamis principaux (62, 64) et configuré de plus pour supporter les assemblages de tamis supplémentaires (70, 72).

7. Moissonneuse-batteuse (10) selon la revendication 6, comprenant de plus des moyens d'entraînement servant à faire osciller le cadre de support (74, 76), de sorte que les assemblages de tamis supplémentaires (70, 72) peuvent être secoués simultanément avec les tamis supérieurs des assemblages de tamis principaux (62, 64).

8. Moissonneuse-batteuse (10) selon l'une quelconque des revendications précédentes, comprenant de plus des assemblages de ventilateurs dédiés (55) configurés pour fournir un flux d'air uniquement aux assemblages de tamis supplémentaires (70, 72) pour éliminer les matériaux autres que le grain.

9. Moissonneuse-batteuse (10) selon l'une quelconque des revendications 1 à 7, comprenant de plus un assemblage de ventilateurs principaux configuré pour fournir un flux d'air aux assemblages de tamis principaux (62, 64) ainsi qu'aux assemblages de tamis supplémentaires (70, 72) pour retirer les matériaux autres que le grain.

10. Moissonneuse-batteuse (10) selon l'une quelconque des revendications précédentes, comprenant de plus des retours d'otons (50A, 51A, 53A, 56A ; 50B, 51B, 53B, 56B) adjacents à un assemblage de tamis supplémentaire respectif (70, 72), dans laquelle chaque retour d'otons (50A, 51A, 53A, 56A, 82A ; 50B, 51B, 53B, 56B, 82B) est disposé pour recevoir des otons provenant des assemblages de tamis principaux (62, 64) et pour renvoyer lesdits otons à son assemblage de tamis supplémentaire respectif (70, 72) pour effectuer une séparation supplémentaire du grain de la matière autre que le grain des otons renvoyés dans l'assemblage de tamis supplémentaire (70, 72) respectif.

11. Moissonneuse-batteuse (10) selon la revendication 10, comprenant de plus un assemblage de vis sans fin (56) d'otons disposé pour recevoir les otons provenant des assemblages de tamis principaux (62, 64) et pour renvoyer lesdits otons vers les assemblages de tamis supplémentaires (70, 72) en acheminant les otons de retour vers des ouvertures (84A, 84B) formées dans les côtés extérieurs de la moissonneuse-batteuse (10) et en communication avec les assemblages de tamis supplémentaires (70, 72).

12. Moissonneuse-batteuse (10) selon la revendication 11, dans laquelle chaque retour d'otons (50A, 51A, 53A, 56A ; 50B, 51B, 53B, 56B) comprend un convoyeur (53A, 53B) servant à transporter et diriger les otons de retour à partir des ouvertures (84A, 84B) vers les assemblages de tamis supplémentaires (70, 72).
